Europäisches Patentamt

European Patent Office

Office européen des brevets

(11) Veröffentlichungsnummer: **0 103 873**
**B1**

# EUROPÄISCHE PATENTSCHRIFT

(45) Veröffentlichungstag der Patentschrift:
**18.01.89**

(21) Anmeldenummer: **83109207.7**

(22) Anmeldetag: **16.09.83**

(51) Int. Cl.⁴: **H 04 B 9/00, H 04 L 25/30**

(54) **Bussystem mit Lichtwellenleitern.**

(30) Priorität: **20.09.82 DE 3234739**

(43) Veröffentlichungstag der Anmeldung:
**28.03.84 Patentblatt 84/13**

(45) Bekanntmachung des Hinweises auf die Patenterteilung:
**18.01.89 Patentblatt 89/3**

(84) Benannte Vertragsstaaten:
**AT CH DE FR GB IT LI**

(56) Entgegenhaltungen:
**DE-A- 3 224 425**
**GB-A- 2 062 421**

**PATENTS ABSTRACTS OF JAPAN, Band 5, Nr. 23
(E-45)[695], 12. Februar 1981; & JP - A - 55 150 645**

(73) Patentinhaber: **Siemens Aktiengesellschaft Berlin und München, Wittelsbacherplatz 2, D-8000 München 2 (DE)**

(72) Erfinder: **Thinschmidt, Hans, Kreuzlingerstrasse 52c, D-8034 Germering (DE)**

## Beschreibung

Die Erfindung bezieht sich auf ein Bussystem mit Lichtwellenleitern, bei dem das zu übertragende Informationssignal durch einen elektrooptischen Sender in ein Lichtsignal umgewandelt und dieses in einen Lichtwellenleiter eingekoppelt wird und bei dem das über den Lichtwellenleiter übertragene Lichtsignal durch einen optoelektrischen Empfänger in ein elektrisches Nutzsignal umgewandelt und aus diesem das Informationssignal wiedergewonnen wird, insbesondere für Mehrrechnersysteme mit lokalem optischen Bus mit Sternkoppler nach Patentanmeldung DE-A-3 224 425, veröffentlicht 5.1.1984.

In lokalen Netzen mit Mehrrechneranordnung sind geeignete Übertragungsstrecken für die Kommunikation der Rechner untereinander erforderlich. Grundsätzlich können die Rechner als Stern, als Ring oder über einen Bus zusammengeschaltet werden. Bei einem Bussystem werden an die Übertragungsstrecke, nähmlich den Bus, umfangreiche Anforderungen gestellt: Z.B. muss die Übertragung der Information mit hoher Geschwindigkeit und grosser Sicherheit erfolgen; die Taktrückgewinnung auf der Empfängerseite erfordert eine entsprechende Codierung der Informationen; es muss eine Kollisionserkennung vorgesehen werden, die anspricht, wenn gleichzeitig mehrere Rechner zu senden beginnen.

Es ist bekannt, Mehrrechnersysteme aufzubauen, bei dem für den Bus ein Lichtwellenleiter verwendet wird (z.B. Siemens Forschung- und Entwicklungsberichte Band 9, 1980, Nr. 1, S. 33–37; IEEE Transactions on Communications, Vol. Com.–26, Nr. 7, July 1978, 983–990). Bei diesen Mehrrechneranordungen mit Lichtwellenleiterbus werden die Informationssignale mit Hilfe eines elektrooptischen Senders in Lichtsignale umgewandelt, die vom Sender in den Lichtwellenleiter eingekoppelt werden. Über den Lichtwellenleiter werden diese Signale z.B. mit Hilfe eines Sternkopplers zu den am Bus angeschlossenen Rechnern übertragen. Dort kann ein optoelektrischer Empfänger die Lichtsignale wiederum in elektrische Informationssignale umwandeln, die dann im Rechner auf übliche Weise bearbeitet werden. Bisher werden für derartige optoelektrische Empfänger wechselstromgekoppelte, geregelte Verstärker eingesetzt. Die bei derartigen Verstärkern vorhandenen Regelzeitkonstanten sind jedoch beim Busbetrieb hinderlich, da zwischen jeder übertragenen Information auf dem Bus der Pegel Null herrscht. Für die Taktrückgewinnung auf der Empfängerseite werden spezielle Codierungen angewandt, z.B. Manchester-Code, der einen Bandbreitenverlust bedeutet, oder es wird mit Scramblern und PLL-Schaltungen gearbeite, die einen erheblichen Aufwand verursachen. Die Kollisionserkennung wird schliesslich durch Informationsvergleich durchgeführt. Dadurch können aber nur die an der Kollision beteiligten Rechner die Kollision erkennen.

Die der Patentanmeldung DE-A-3 224 425, auf die sich die vorliegende Erfingung bezieht, zugrundeliegende Aufgabe besteht darin, ein Bussystem mit einem Lichtwellenleiter, einem elektrooptischen Sender und einem optoelektronischen Empfänger anzugeben, das so ausgeführt ist, dass die besonderen Vorteile des Lichtwellenleiters mit einer Gleichstromübertragungsstrecke im Empfänger miteinander verbunden werden. Diese Aufgabe wird durch ein Bussystem nach dem Oberbegriff des Hauptanspruchs der Patentanmeldung DE-A-3 224 425 gelöst, das durch die im kennzeichnenden Teil dieses Hauptanspruchs angegebenen Merkmale charakterisiert ist.

Der vorliegenden Erfindung liegt die Aufgabe zugrunde, eine Schaltungsanordnung für ein Bussystem der eingangs genannten Art zu schaffen, die über das Bussystem übertragene Nutzsignale in einem vorbestimmten Eingangssignalspannungsbereich abtasten kann, wobei die Amplitude und Potentiallage Nutzsignale beliebig variiert sein können. Diese Schaltungsanordnung soll darüberhinaus aufgabengemäss einen einfachen, wenige Bauteile umfassenden und daher zuverlässig arbeitenden Aufbau haben.

Die der Erfindung zugrundeliegende Aufgabe wird durch eine Schaltungsanordnung für ein Bussystem nach Anspruch 1 der Patentanmeldung DE-A-3 224 425 und dem Oberbegriff des vorliegenden Anspruchs 1 gelöst, und ist dadurch gekennzeichnet, dass in der Abtaststufe zwei Gleichrichteranordnungen vorgesehen sind, wobei eine dieser Gleichrichteranordnungen positive und die andere dieser Gleichrichteranordnungen negative Pegel des Eingangssignals gleichrichtet, dass jede dieser Gleichrichteranordnungen jeweils mit einem ihr zugeordneten Ladekondensator verbunden ist, dass jeweils einer der Beläge der Ladekondensatoren fest auf ein Bezugspotential, vorzugsweise Erde, des Eingangssignals gelegt ist, dass die jeweils anderen Beläge über eine Impedanz miteinander verbunden sind und dass an einer Abzweigung der Impedanz einerseits und den Signaleingang der Abtaststufe andererseits eine Komparatoranordnung angeschlossen ist, so dass die Komparatoranordnung das Eingangssignal mit einem von der Impedanz abgeleiteten Bezugspotential vergleichen kann.

Eine solche Abtasteinrichtung ist an sich aus der Zusammenfassung der JP-A-55 150 645 bekannt.

Vorteilhafte Weiterbildungen der Erfindung sind durch die in den Unteransprüchen angegebenen Merkmale gekennzeichnet.

Die Erfindung wird im folgenden anhand einer Figur im einzelnen erläutert.

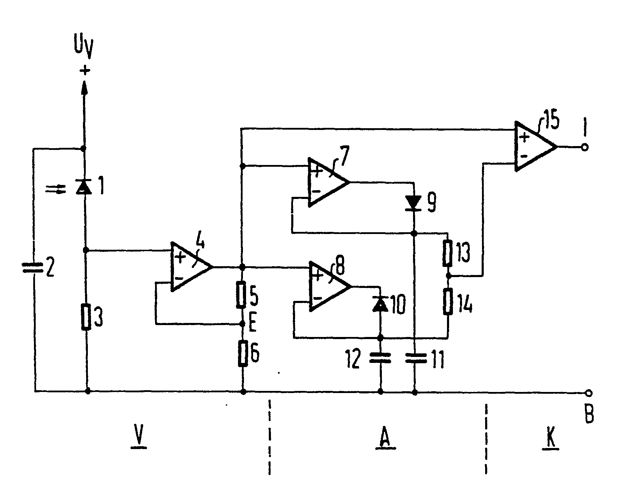

Die Figur zeigt das Prinzipschaltbild eines bevorzugten Ausführungsbeispiels für die erfindungsgemässe Schaltungsanordnung. In einer Vorstufe V, die mit einem ihrer Stromversorgungsanschlüsse auf einem Vorspannungspotential $U_V$ liegt und mit dem anderen ihrer Stromversorgungsanschlüsse auf dem Bezugspotential B, vorzugsweise Erde, liegt, ist eine Reihenschaltung aus einer Fotodiode 1 und einem Widerstand 3 vorgesehen, welche Reihenschaltung durch einen Stabilisierungskondensator 2 überbrückt ist. Der Verbindungspunkt zwischen der Fotodiode 1 und dem Widerstand 3 ist an den nichtinvertierenden Eingang eines Operationsverstärkers 4 geführt. Desweiteren sind in der Vorstufe V noch zwei weitere Widerstände 5 und 6 vorgesehen, die in Reihe geschaltet sind, wobei der eine Anschluss des Widerstandes 6 auf dem Bezugspotential B liegt und der eine Anschluss des Widerstandes 5 in die Abtaststufe A und die Komparatorstufe K geführt ist, während ein Verbindungspunkt zwischen den beiden Widerständen 5, 6, der die Funktion eines Signaleingangs E für den invertierenden Eingang des Operationsverstärkers 4 hat, ein Eingangssignal an diesen invertierenden Eingang des Operationsverstärkers 4 legt. Der Verbindungspunkt zwischen der Fotodiode 1 und dem Widerstand 3 stellt sich entsprechend dem optischen Signal, das von der Fotodiode 1 aufgenommen wird, auf ein dieses optische Signal repräsentierendes Potential ein. In der Abtaststufe sind zwei Gleichrichteranordnungen vorgesehen, die in dem bevorzugten Ausführungsbeispiel jeweils aus der Reihenschaltung eines Differentialverstärkers 7 mit einer Diode 9 bzw. 8 mit einer Diode 10 bestehen. Wie bereits erläutert, ist der eine Anschluss des Widerstandes 5 der Vorstufe V, der auch an den Ausgang des Operationsverstärkers 4 der Vorstufe V angeschlossen ist, an die Abtaststufe geführt, was im vorliegenden Fall bedeutet, dass dieser Widerstandsanschluss jeweils an den nichtinvertierenden Signaleingang des ersten Differentialverstärkers 7 und an den nichtinvertierenden Eingang des Differentialverstärkers 8 geführt ist. Der Ausgang des ersten Differentialverstärkers 7 der Abtaststufe A ist an die Anode der Diode 9 geführt, deren Kathode zum einen mit dem invertierenden Signaleingang des ersten Differentialverstärkers 7 verbunden ist und zum anderen mit einem ersten Anschluss eines Widerstandes 13 und mit einem ersten Belag eines Ladekondensators C11 verbunden ist. Der Signalausgang des zweiten Differentialverstärkers 8 ist an die Kathode der zweiten Diode 10 angeschlossen, deren Anode einerseits mit dem invertierenden Signaleingang dieses Differentialverstärkers 8 und andererseits an einen Anschluss eines weiteren Widerstandes 14 sowie an einen ersten Belag eines zweiten Ladekondensators 12 geführt ist. Die Widerstände 13 und 14 sind in Reihe geschaltet und bilden somit einen Spannungsteiler, dessen Abgriff, nämlich der Verbindungspunkt zwischen diesen beiden Widerständen, an den invertierenden Eingang eines weiteren Differentialverstärkers 15 in der Komparatorstufe K angeschlossen ist. Die jeweils zweiten Beläge der Ladekondensatoren 11 und 12 sind auf das Bezugspotential B gelegt. Der Signalausgang des Differentialverstärkers 15 innerhalb der Komparatorstufe K ist mit einer Ausgangsklemme I für das gewonnene Informationssignal verbunden.

Nach einer Weiterbildung der Erfindung können die Gleichrichteranordnungen anders wie in dem gezeigten bevorzugten Ausführungsbeispiel auch lediglich mittels Dioden realisiert sein. Die genannten Differentialverstärker 7, 8 sind vorteilhafterweise jeweils als Operationsverstärker realisiert, denen die Dioden 9 bzw. 10 nachgeschaltet sind. Der Spannungsteiler, der aus den Widerständen 13 und 14 gebildet ist, stellt allgemein eine Impedanz dar und kann aus geeigneten Blind- oder Scheinwiderständen bestehen oder wie in dem bevorzugten Ausführungsbeispiel durch ohmsche Widerstände realisiert sein. Vorzugsweise ist der Spannungsteiler mit den Widerständen 13, 14 so ausgebildet, dass dessen Teilungsverhältnis 1 : 1 ist.

Eine Weiterbildung der Erfindung sieht vor, dass der Spannungsteiler n Abgriffe hat, wobei jeder dieser n Abgriffe jeweils mit einem individuellen Signaleingang der Komparatoranordnung K verbunden ist. Diese Weiterbildungsform ist nicht gezeigt.

Vorteilhafterweise ist das Verhältnis zwischen dem Summenwert des Spannungsteilers und dem Reihenschaltungswert der Kondensatoren 11, 12 derart ausgewählt, dass sich die gewünschte Nachführ-Zeitkonstante ergibt.

## Patentansprüche

1. Bussystem mit Lichtwellenleitern, bei dem das zu übertragende Informationssignal durch einen elektrooptischen Sender in ein Lichtsignal umgewandelt und dieses in einen Lichtwellenleiter eingekoppelt wird und bei dem das über Lichtwellenleiter übertragene Lichtsignal durch einen optoelektrischen Empfänger in ein elektrisches Nutzsignal umgewandelt und aus diesem das Informationssignal wiedergewonnen wird, insbesondere für Mehrrechneranordnungen mit lokalem optischen Bus mit Sternkoppler, wobei durch einen Sender, dessen in den Lichtwellenleiter eingekoppelte, von dem Informationssignal abhängige Lichtleistung in digitalen Schritten änderbar ist, mit einem aus gleichstromgekoppelten Verstärkern ohne Verstärkungsregelung aufgebauten Empfänger, der eine Vorstufe (V) zur Erzeugung des Nutzsignals, eine erste Komparatorstufe (15) zur Erzeugung des Informationssignals aus dem Nutzsignal und eine zweite Komparatorstufe (nicht gezeichnet) aufweist, der eine in digitalen Stufen änderbare Referenzspannung zugeführt wird, die den Pegel des Nutzsignals abtastet und ein Kollisionssignal abgibt, wenn das Nutzsignal die Referenzspannung übersteigt, wobei zwischen der Vorstufe (V) und den Komparatorstufen (K) eine Abtaststufe (A) vorgesehen ist, die aus dem Nutzsignal das Referenzsignal für eine Mittenabtastung des Nutzsignals für die erste Komparatorstufe erzeugt, dadurch gekennzeichnet, dass in der Abtaststufe (A) zwei Gleichrichteranordnungen (7/9, 8/10) vorgesehen sind, wobei eine dieser Gleichrichteranordnungen (7/9) positive und die andere dieser Gleichrichteranordnungen (8/10) negative Pegel des Eingangssignals gleichrichtet, dass jede dieser Gleichrichteranordnungen (7/9, 8/10) jeweils mit einem ihr zugeordneten Ladekondensator (11 bzw. 12) verbunden ist, dass jeweils einer der Beläge der Ladekondensatoren (11, 12) fest auf ein Bezugspotential (B), vorzugsweise Erde, des Eingangssignals gelegt ist, dass die jeweils anderen Beläge über eine Impedanz (13/14) miteinander verbunden sind und dass an eine Abzweigung der Impedanz (13/14) einerseits und einen Signaleingang (E') der Abtaststufe (A) andererseits eine Komparatoranordnung (K) angeschlossen ist, so dass die Komparatoranordnung (K) das Eingangssignal mit einem von der Impedanz (13/14) abgeleiteten Bezugspotential vergleichen kann.

2. Bussystem nach Anspruch 1, dadurch gekennzeichnet, dass die Gleichrichteranordnungen mittels Dioden realisiert sind.

3. Bussystem nach Anspruch 1, dadurch gekennzeichnet, dass die Gleichrichteranordnungen aus Differentialverstärkern (7, 8) mit nachgeordneten Dioden (9, 10) bestehen.

4. Bussystem nach Anspruch 3, dadurch gekennzeichnet, dass die Differentialverstärker (7, 8) jeweils als Operationsverstärker mit nachgeschalteten Dioden realisiert sind.

5. Bussystem nach Anspruch 1, dadurch gekennzeichnet, dass die Impedanz (13/14) ein Spannungsteiler ist.

6. Bussystem nach Anspruch 5, dadurch gekennzeichnet, dass der Spannungsteiler aus ohm'schen Widerständen (13, 14) besteht.

7. Bussystem nach Anspruch 6, dadurch gekennzeichnet, dass der Spannungsteiler n Abgriffe hat, wobei jeder dieser n Abgriffe jeweils mit einem individuellen Signaleingang der Komparatoranordnung (K) verbunden ist.

8. Bussystem nach Anspruch 6, dadurch gekennzeichnet, dass der Spannungsteiler ein Teilungsverhältnis 1:1 hat.

9. Bussystem nach Anspruch 6, dadurch gekennzeichnet, dass das Verhältnis zwischen dem Summenwert des Spannungsteilers und dem Reihenschaltungswert der Kondensatoren (11, 12) derart ausgewählt ist, dass sich die gewünschte Nachführ-Zeitkonstante ergibt.

## Claims

1. Fibre-optic bus system in which the information signal to be transmitted is converted by means of an electro-optical transmitter into a light signal and the latter is coupled into an optical waveguide and in which the light signal transmitted via optical waveguides is converted by an opto-electric receiver into a useful electric signal and from this the information signal is recovered, particularly for multi-processor arrangements with a local optical bus with star coupler, with a transmitter, the light power of which, which is coupled into the optical waveguide and depends on the information signal, can be changed in digital steps, with a receiver constructed from direct-current-coupled amplifiers without gain control which exhibits an input stage (V) for generating the useful signal, a first comparator stage (15) for generating the information signal from the useful signal and a second comparator stage, not drawn, which is supplied with a reference voltage which can be changed in digital steps and which samples the level of the useful signal and emits a collision signal if the useful signal exceeds the reference voltage, a sampling stage (A) being provided between the input stage (V) and the comparator stages (K) which generates from the useful signal the reference signal for a mid-level sampling of the useful signal for the first comparator stage, characterized in that two rectifier arrangements (7/9, 8/10) are provided in the sampling stage (A), one of these rectifier arrangements (7/9) rectifying positive levels and the other one of these rectifier arrangements (8/10) rectifying negative levels of the input signal, that each of these rectifier arrangements (7/9, 8/10) is in each case connected to an associated charging capacitor (11 and 12, respectively), that in each case one of the coatings of the charging capacitors (11, 12) is permanently connected to a reference potential (B), preferably earth, of the input signal, that the other coatings in each case are connected to one another via an impedance (13/14) and that a comparator arrangement (K) is connected to a branch of the impedance (13/14), on the one hand, and to a signal input (E') of the sampling stage (A) on the other hand, so that the comparator arrangement (K) can compare the input signal with a reference potential derived from the impedance (13/14).

2. Bus system according to Claim 1, characterized in that the rectifier arrangements are implemented by means of diodes.

3. Bus system according to Claim 1, characterized in that the rectifier arrangements consist of differential amplifiers (7, 8) with subsequent diodes (9, 10).

4. Bus system according to Claim 3, characterized in that the differential amplifiers (7, 8) are in each case implemented as operational amplifiers with downstream diodes.

5. Bus system according to Claim 1, characterized in that the impedance (13/14) is a voltage divider.

6. Bus system according to Claim 5, characterized in that the voltage divider consists of ohmic resistances (13, 14).

7. Bus system according to Claim 6, characterized in that the voltage divider has n taps, each of these n taps in each case being connected to an individual signal input of the comparator arrangement (K).

8. Bus system according to Claim 6, characterized in that the voltage divider has a dividing ratio of 1:1.

9. Bus system according to Claim 6, characterized in that the ratio between the sum value of the voltage divider and the series-circuit value of the capacitors (11, 12) is selected in such a manner that the desired tracking time constant is obtained.

## Revendications

1. Système de bus avec des guides d'onde de lumière, dans lequel le signal d'information qui est à transmettre est transformé par un émetteur électro-optique en un signal lumineux et celui-ci est introduit dans un guide d'onde de lumière, et dans lequel le signal lumineux qui est transmis par le guide d'onde de lumière est transformé par un récepteur opto-électrique en un signal électrique utile et à partir duquel le signal d'information est récupéré, en particulier pour des dispositifs à calculateurs multiples avec un bus optique local en couplage en étoile, du type dans lequel, à l'aide d'un émetteur dont la puissance lumineuse introduite dans le guide d'onde de lumière et qui dépend du signal de l'information, est susceptible d'être modifiée en pas numériques, avec un récepteur constitué par des amplificateurs à couplage en courant continu, mais sans réglage du gain, récepteur qui comporte un étage d'entrée (V) pour produire le signal utile, un premier étage-comparateur (15) pour produire le signal d'information à partir du signal utile et un second étage-comparateur (non représenté), auquel on applique une tension de référence qui est susceptible d'être modifiée par paliers numériques, qui explore le niveau du signal utile et émet un signal de collision lorsque le signal utile dépasse la tension de référence, étant noté qu'entre l'étage d'entrée (V) et les étages-comparateurs (K) est prévu un étage d'exploration (A) qui produit, à partir du signal utile, le signal de référence pour un balayage médian du signal utile pour le premier étage-comparateur, caractérisé par le fait que dans l'étage de balayage (A), sont prévus deux dispositifs redresseurs (7/9, 8/10), l'un de ces dispositifs redresseurs (7/9) redresse des niveaux positifs et l'autre de ces dispositifs redresseurs (8/10) redresse des niveaux négatifs du signal d'entrée, que chacun de ces dispositifs redresseurs (7/9, 8/10) est relié avec un condensateur de charge (11, 12) qui lui est associé, que respectivement l'une des armatures des condensateurs de charge (11, 12) est portée à un potentiel de référence fixe (B), de préférence la terre, du signal d'entrée, que les autres armatures sont reliées entre elles par l'intermédiaire d'une impédance (13, 14) et qu'à une dérivation de l'impédance (13/14), d'une part et à une entrée des signaux (E') de l'étage d'exploration (A), d'autre part, est relié un dispositif comparateur (K), en sorte que le dispositif comparateur (K) peut comparer le signal d'entrée avec un potentiel de référence qui est dérivé de l'impédance (13/14).

2. Système de bus selon la revendication 1, caractérisé par le fait que les dispositifs redresseurs sont réalisés à l'aide de diodes.

3. Système de bus selon la revendication 1, caractérisé par le fait que les dispositifs redresseurs sont constitués par des amplificateurs différentiels (7, 8) avec des diodes aval (9, 10).

4. Système de bus selon la revendication 3, caractérisé par le fait que les amplificateurs différentiels (7, 8) sont respectivement réalisés sous la forme d'amplificateurs opérationnels avec des diodes aval.

5. Système de bus selon la revendication 1, caractérisé par le fait que l'impédance (13/14) est constituée par un diviseur de tension.

6. Système de bus selon la revendication 5, caractérisé par le fait que le diviseur de tension est constitué par des résistances ohmiques (13, 14).

7. Système de bus selon la revendication 6, caractérisé par le fait que le diviseur de tension possède n prises, chacune de ces n prises étant respectivement reliée avec une entrée individuelle des signaux du dispositif comparateur (K).

8. Système de bus selon la revendication 6, caractérisé par le fait que le diviseur de tension a un rapport de division de 1:1.

9. Système de bus selon la revendication 6, caractérisé par le fait que le rapport entre la valeur-somme du diviseur de tension et la valeur du circuit série des condensateurs (11, 12) est choisi de telle façon qu'il en résulte la constante de temps de réajustement souhaitée.